# EUROPEAN PATENT APPLICATION

(11) **EP 1 533 338 A1**
(43) Date of publication of application: **25.05.2005**
(21) Application number: 03741326.7
(22) Date of filing: 10.07.2003
(51) Int. Cl.: C08L 21/00, C08K 5/40, B60C 1/00

(54) **TIRE, RETREADED TIRE, AND RUBBER COMPOSITION FOR REPAIRING VULCANIZED RUBBER PRODUCT**

(30) Priority: 11.07.2002 JP 2002202945
(71) Applicant: Bridgestone Corporation, Tokyo 104-8340 (JP)
(72) Inventor: SUZUKI, Akira c/o BRIDGESTONE CORP. Technical Ctr., Kodaira-shi, Tokyo 187-8531 (JP)
(74) Representative: Whalley, Kevin
(86) International application number: PCT/JP2003/008789
(87) International publication number: WO 2004/007609

(57) **Abstract**

A rubber composition compounded with specified amounts of (1) a thiuram type compound having a specified structure, (2) a compound such as benzothiodisulfide, benzothiazole or the like and (3) a compound such as guanidine, aldehydeamine or the like based on 100 parts by mass of rubber component and having excellent vulcanization characteristics at a low temperature in a short time and a high fracture resistance is used in a tire or a retreaded tire or as a rubber composition for repairing vulcanized rubber articles, whereby the productivity of the tire, retreaded tire or vulcanized rubber article can be improved without badly affecting other performances.

## Description

### TECHNICAL FIELD

This invention relates to a tire, a retreaded tire and a rubber composition for repairing vulcanized rubber articles, and more particularly to a tire and a retreaded tire using a rubber composition obtained by compounding rubber component with a combination of specified vulcanization accelerators as well as a rubber composition for repairing a vulcanized rubber article made of the above rubber composition.

### BACKGROUND ART

In the production of tires, the vulcanization of a short time is desired from a viewpoint of the productivity. When the radial thickness of the tire is particularly thick, however, under-vulcanization may be caused because heat sufficient for the vulcanization is not given to rubber members forming an interior of the tire. In rubber between belt layers, rubber between belt and carcass ply, and cushion rubber between tread rubber and belt among the rubber members forming the interior of the tire, the under-vulcanization is caused in the vicinity of reinforcing materials such as steel cords, organic fiber cords and the like, which may result in tire troubles. Therefore, a rubber composition used in the rubber member forming the interior of the tire is desired to have a large fracture resistance even in the vulcanization at a low temperature in a short time as compared with a rubber composition used in a rubber member forming a surface layer portion of the tire.

On the other hand, a retreaded tire is usually produced by attaching a pre-cure tread for retreading to a base tire, which is formed by removing and buffing a tread of a used tire to expose a retreading surface, through a cushion rubber and integrally vulcanizing them. In this case, it is required to make consideration that a vulcanized base tire does not cause over-vulcanization in addition to the productivity. For this end, a rubber composition used in the cushion rubber disposed between the base tire and the pre-cure tread is required to have a high fracture resistance even in the vulcanization at a relatively low temperature in a short time.

Furthermore, a rubber composition used for repairing a bear of a new tire or partially repairing a damaged portion of a used tire is also desired to have a high fracture resistance even in the vulcanization at a low temperature in a short time from a viewpoint that the over-vulcanization is not caused in a non-repairing rubber portion.

As a vulcanization accelerator for vulcanizing at a low temperature in a short time, there has been known a thiuram type accelerator exemplified by tetramethylthiuram disulfide (TT) since early times, but it has a problem of causing carcinogenic nitrosoamines. On the contrary, as a rubber composition containing no nitrosoamine precursor and vulcanizing at a low temperature in a short time, JP-A-8-5989 discloses a rubber composition comprising a combination of specified vulcanization accelerators inclusive of tetrabenzylthiuram disulfide (TBZTD) and zinc dibenzyl dithiocarbamate. However, the latter rubber composition can not be still satisfied from a viewpoint of the vulcanization characteristics at the low temperature in the short time and the fracture resistance.

### DISCLOSURE OF THE INVENTION

It is an object of the invention to solve the problems of the above conventional techniques and to provide a tire and a retreaded tire improving the productivity without badly affecting other performances by using a particular rubber composition having excellent vulcanization characteristics at a low temperature in a short time and a high fracture resistance as well as a rubber composition for repairing vulcanized rubber articles.

The inventor has made various studies in order to achieve the above object, and found that the object can be achieved by using a vulcanization accelerator consisting of a particular combination containing a specified thiuram type compound, and as a result the invention has been accomplished.

That is, the tire according to the invention is a tire comprising a rubber member forming a surface layer portion of the tire, a rubber member forming an interior of the tire and a rubber composite consisting of rubber and a reinforcing material, characterized in that as the rubber member forming the interior of the tire and/or the rubber composite is used a rubber composition comprising Component (1): 0.1-4.0 parts by mass of a thiuram type compound represented by the following formula (**I**): 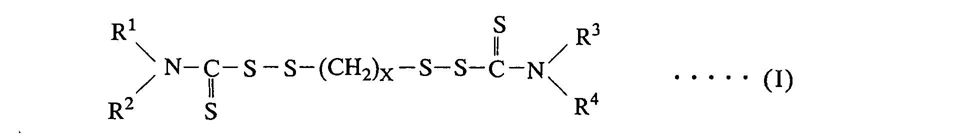 (wherein each of R¹-R⁴ is benzyl group or an alkyl group having a carbon number of 1-18 and X is 2-18); Component (2): 0.1-2.0 parts by mass of at least one compound selected from the group consisting of benzothiazyl disulfides, benzothiazoles, amine salts and zinc salts of benzothiazoles and benzothiazolyl sulfenamides; and Component (3): 0.1-2.0 parts by mass of at least one compound selected from the group consisting of amines, guanidines, aldehydeamines and aldehyde ammonia based on 100 parts by mass of a rubber component.

In a preferable embodiment of the tire according to the invention, each of R¹-R⁴ in the formula (I) is benzyl group or 2-ethylhexyl group and X is 6-12.

In another preferable embodiment of the tire according to the invention, the rubber member forming the interior of the tire is at least one rubber member selected from the group consisting of rubber between belt layers, cushion rubber between tread and belt and rubber between belt and carcass ply.

In the other preferable embodiment of the tire according to the invention, the rubber component of the rubber composition contains natural rubber.

In a further preferable embodiment of the tire according to the invention, the component (2) is at least one compound selected from the group consisting of 2-mercaptobenzothiazole, benzothiazolyl sulfenamide, zinc salt of 2-mercaptobenzothiazole and amine salt of 2-mercaptobenzothiazole.

In a still further preferable embodiment of the tire according to the invention, the rubber composition has a 90% vulcanization time at 120°C (t_{0.9}) of 12-18 minutes and a tensile stress at break after the vulcanization at 120°C for 20 minutes of not less than 29.0 MPa.

Also, the retreaded tire according to the invention is a vulcanized retreaded tire comprising a base tire, a tread for retreading and a cushion rubber disposed therebetween, characterized in that as the cushion rubber is used a rubber composition comprising Component (1): 0.1-4.0 parts by mass of a thiuram type compound represented by the following formula (**I**): 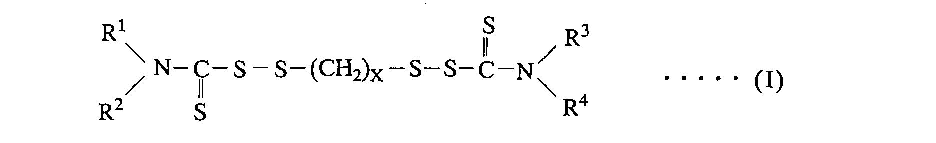 (wherein each of R¹-R⁴ is benzyl group or an alkyl group having a carbon number of 1-18 and X is 2-18); Component (2): 0.1-2.0 parts by mass of at least one compound selected from the group consisting of benzothiazyl disulfides, benzothiazoles, amine salts and zinc salts of benzothiazoles and benzothiazolyl sulfenamides; and Component (3): 0.1-2.0 parts by mass of at least one compound selected from the group consisting of amines, guanidines, aldehydeamines and aldehyde ammonia based on 100 parts by mass of a rubber component.

In a preferable embodiment of the retreaded tire according to the invention, a vulcanization temperature is 100-130°C.

In another preferable embodiment of the retreaded tire according to the invention, the rubber component of the rubber composition contains natural rubber.

In the other preferable embodiment of the retreaded tire according to the invention, the component (2) is at least one compound selected from the group consisting of 2-mercaptobenzothiazole, benzothiazolyl sulfenamide, zinc salt of 2-mercaptobenzothiazole and amine salt of 2-mercaptobenzothiazole.

In a further preferable embodiment of the retreaded tire according to the invention, the rubber composition has a 90% vulcanization time at 120°C (t_{0.9}) of 12-18 minutes and a tensile stress at break after the vulcanization at 120°C for 20 minutes of not less than 29.0 MPa.

Furthermore, the rubber composition for repairing the vulcanized rubber articles according to the invention comprises Component (1): 0.1-4.0 parts by mass of a thiuram type compound represented by the following formula (**I**): 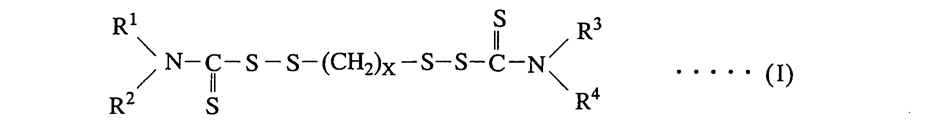 (wherein each of R¹-R⁴ is benzyl group or an alkyl group having a carbon number of 1-18 and X is 2-18); Component (2): 0.1-2.0 parts by mass of at least one compound selected from the group consisting of benzothiazyl disulfides, benzothiazoles, amine salts and zinc salts of benzothiazoles and benzothiazolyl sulfenamides; and Component (3): 0.1-2.0 parts by mass of at least one compound selected from the group consisting of amines, guanidines, aldehydeamines and aldehyde ammonia based on 100 parts by mass of a rubber component.

### BEST MODE FOR CARRYING OUT THE INVENTION

The invention will be described in detail below. The rubber component used in the rubber composition according to the invention is not particularly limited and includes natural rubber and diene rubbers. As the diene rubber are mentioned, for example, polyisoprene synthetic rubber (IR), cis-1,4-polybutadiene rubber (BR), styrene-butadiene rubber (SBR), acrylonitrile-butadiene rubber (NBR), chloroprene rubber (CR), butyl rubber (IIR) and the like. These rubbers may be used alone or in a blend of two or more. Among them, rubber containing natural rubber, particularly rubber containing not less than 70% by mass of natural rubber is preferable.

The component (1) used in the rubber composition according to the invention is a thiuram type compound represented by the formula (I). In the formula (I), each of R1-R4 is benzyl group or an alkyl group having a carbon number of 1-18, preferably benzyl group or an alkyl group having a carbon number of 4-12. As the alkyl group having a carbon number of 1-18 are mentioned straight or branched groups such as methyl group, ethyl group, propyl group, butyl group, pentyl group, hexyl group, heptyl group, octyl group, nonyl group, decyl group, undecyl group, dodecyl group, tridecyl group, tetrdecyl group, pentadecyl group, hexadecyl group, heptadecyl group, octadecyl group and the like. On the other hand, X is 2-18, preferably 6-12. As the thiuram type compound of the formula (I), 1,6-bis(N,N'-dibenzylthiocarbamoyldithio)-hexane, 1,6-bis(N.N'-di(2-ethylhexyl)thiocarbamoyldithio)-hexane, 1,6-bis(N,N'-diisobutylthiocarbamoyldithio)-hexane and the like are particularly preferable.

The amount of the component (1) compounded is 0.1-4.0 parts by mass based on 100 parts by mass of the rubber component. When the amount is less than 0.1 part by mass, the effect of shortening the vulcanization time is low, while when it exceeds 4.0 parts by mass, problems in the operability such as burnt deposit and the like are apt to be easily caused. A preferable range of the amount is 0.3-2.0 parts by mass.

As the component (2) used in the rubber composition according to the invention is used at least one compound selected from the group consisting of benzothiazyl disulfides, benzothiazoles, amine salts and zinc salts of benzothiazoles and benzothiazolyl sulfenamides. Among them, benzothiazyl disulfides, benzothiazoles, amine salts and zinc salts of benzothiazoles are preferable. As a concrete example of the component (2) are mentioned dibenzothiazyl disulfide (MBTS), 2-mercaptobenzothiazole (M), zinc salt of 2-mercaptobenzothiazole (MZ), amine salt of 2-mercaptobenzothiazole, benzothiazolyl sulfenamide, N-cyclohexyl-2-benzothiazole sulfenamide (CBS), N-t-butyl-2-benzothiazole sulfenamide (BBS), N-oxyethylene-2-benzothiazole sulfenamide (OBS), N,N-diisopropyl-2-benzothiazole sulfenamide (DPBS) and the like.

The amount of the component (2) compounded is 0.1-2.0 parts by mass based on 100 parts by mass of the rubber component. When the amount is less than 0.1 part by mass, the effect of shortening the vulcanization time is low, while when it exceeds 2.0 parts by mass, the improvement of such an effect is not observed. A preferable range of the amount is 0.3-1.5 parts by mass.

As the component (3) used in the rubber composition according to the invention is used at least one compound selected from the group consisting of amines, guanidines, aldehydeamines and aldehyde ammonia. As a concrete example of the component (3) are mentioned diphenyl guanidine (DPG), diorthotolyl guanidine (DOTG), orthotolyl biguanide (OTBG), n-butylaldehyde-aniline condensate (BAA), hexamethylene tetramine (H), acetoaldehyde-ammonia condensate (AA) and the like.

The amount of the component (3) compounded is 0.1-2.0 parts by mass based on 100 parts by mass of the rubber component. When the amount is less than 0.1 part by mass, the effect of shortening the vulcanization time is low, while when it exceeds 2.0 parts by mass, there are problems in the operability such as burnt deposit and the like.

In the rubber composition compounded with the vulcanization accelerator consisting of the above components (1)-(3), sulfur is usually used as a vulcanizing agent, and an amount thereof is 0.1-5.0 parts by mass, preferably 1.0-3.5 parts by mass based on 100 parts by mass of the rubber component. When the amount is less than 0.1 part by mass, co-vulcanization at rubber-rubber interface may lower, while when it exceeds 5.0 parts by mass, an aging characteristic may lower.

Also, the rubber composition according to the invention may be properly compounded with various additives usually used in the rubber field such as a softening agent, an inorganic filler such as carbon black or the like, a tackifier, an antioxidant, other vulcanization accelerator and so on in addition to the above components.

The rubber composition containing the above components according to the invention is vulcanized at a relatively low temperature in a short time and provides a high fracture resistance. That is, the rubber composition has a 90% vulcanization time at 120°C (t_{0.9}) of 12-18 minutes and a tensile stress at break after the vulcanization at 120°C for 20 minutes of not less than 29.0 MPa.

In a tire comprising a rubber member forming a surface layer portion of the tire, a rubber member forming an interior of the tire and a rubber composite consisting of rubber and a reinforcing material, the rubber composition according to the invention is used in the rubber member forming the interior of the tire and/or the rubber composite. As the rubber member forming the surface layer portion of the tire are mentioned a tread rubber, a sidewall rubber and the like. As the rubber composite consisting of rubber forming the interior of the tire and the reinforcing material are mentioned a belt comprised of at least two belt layers, a carcass ply and the like. As the rubber member forming the interior of the tire are mentioned a tread base rubber, a bead filler rubber, rubber between the belt layers, a cushion rubber between a tread and a belt, rubber between the belt and the carcass ply and the like.

Since the reinforcing material such as steel cord, organic fiber cord or the like is used in the belt or the carcass ply, the conventional technique has a problem of causing the under-vulcanization in the rubber member forming the interior of the tire in the vicinity of the reinforcing material as previously mentioned. However, when the aforementioned rubber composition is used in such a rubber member forming the interior of the tire, the occurrence of the under-vulcanization in the rubber member near to the reinforcing material can be suppressed and hence the tire troubles resulted from the under-vulcanization can be controlled. Also, the rubber composition is excellent in the vulcanization characteristics at a low temperature in a short time, so that the tire productivity can be improved by applying such a rubber composition to the rubber member forming the interior of the tire.

In the retreaded tire, the rubber composition of the invention can be applied to the cushion rubber disposed between the base tire and the tread rubber member for retreading. In this case, the pre-cure tread for retreading is attached to the base tire through the cushion rubber and then they are vulcanized integrally. The vulcanization temperature is preferably 100-130°C. When the temperature is within the above range, the over-vulcanization of the vulcanized base tire can be suppressed.

Furthermore, the rubber composition of the invention can be preferably used as a rubber composition for repairing a vulcanized rubber article such as tire or the like. In case of repairing the vulcanized rubber article, the rubber composition for repairing is usually attached to a portion to be repaired and then vulcanized, so that it is required that the over-vulcanization is not caused in a non-repairing rubber portion. The vulcanization temperature of the vulcanized rubber article is preferably 120-150°C. When the temperature is within the above range, the over-vulcanization in the non-repairing rubber portion can be suppressed.

The invention will be described in detail with reference to the following examples and comparative examples, but the invention is not limited to these examples.

### <EXAMPLE>

A rubber composition having a compounding recipe shown in Table 1 is prepared and the 90% vulcanization time (t_{0.9}) thereof is measured. Also, the rubber composition is vulcanized at 120°C for 20 minutes to prepare a test specimen, which is subjected to a test for fracture resistance. The result is shown in Table 1.

### (1) 90% vulcanization time (t_{0.9})

A vulcanizing torque curve is measured at 120±1°C using a curelastometer made by JSR Corporation, and a time (minute) required for arriving at 90% of a maximum value of the vulcanizing torque curve is defined as 90% vulcanization time (t_{0.9}).

### (2) Fracture resistance (stress at break)

The fracture resistance is evaluated by measuring a tensile stress at break at 30°C (MPa) of JIS #3 type specimen according to JIS K6251-1993.

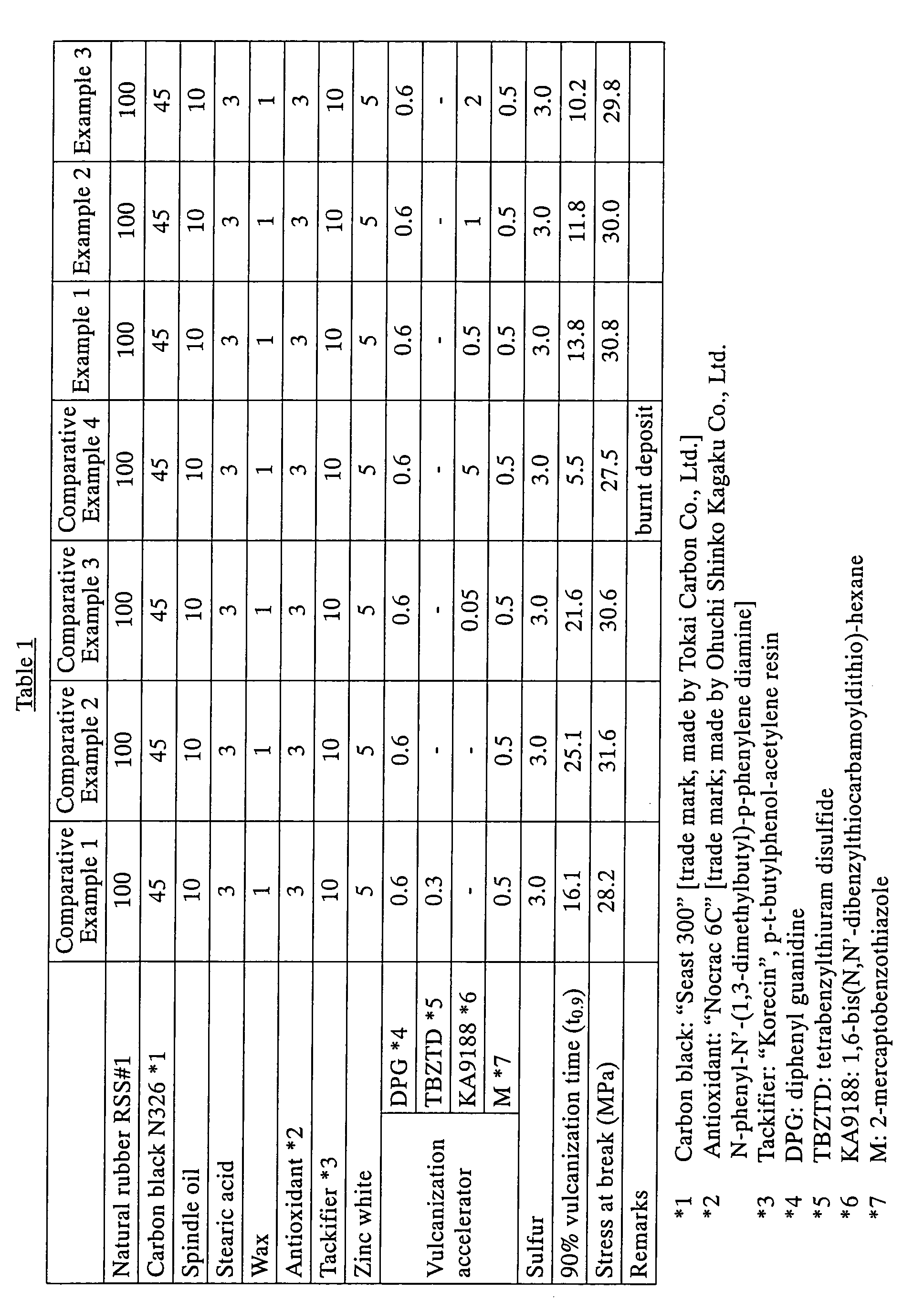

As seen from the above results, the rubber compositions of Examples 1-3 are short in the 90% vulcanization time and large in the fracture resistance as compared with Comparative Example 1. The rubber compositions of Comparative Examples 2 and 3 are large in the fracture resistance but are long in the 90% vulcanization time, while the rubber composition of Comparative Example 4 is short in the 90% vulcanization time but causes the burnt deposit and further is low in the fracture resistance.

Also, the rubber compositions of Examples 1-3 are applied to rubber between belt layers in the tire or cushion rubber in the retreaded tire, whereby the productivity can be improved without damaging the tire performances.

### INDUSTRIAL APPLICABILITY

As mentioned above, according to the invention, tires or retreaded tires can be provided in a high productivity by applying the rubber composition compounded with a plurality of vulcanization accelerators including the specified thiuram type compound to rubber members forming the interior of the tire, which cause the under-vulcanization in the production of the tire, or the cushion rubber of the base tire in the production of the reteaded tire. Also, such a rubber composition can be widely applied as a rubber composition for repairing general vulcanized rubber articles.

## Claims

1. A tire comprising a rubber member forming a surface layer portion of the tire, a rubber member forming an interior of the tire and a rubber composite consisting of rubber and a reinforcing material, **characterized in that** as the rubber member forming the interior of the tire and/or the rubber composite is used a rubber composition comprising;
Component (1): 0.1-4.0 parts by mass of a thiuram type compound represented by the following formula (**I**): 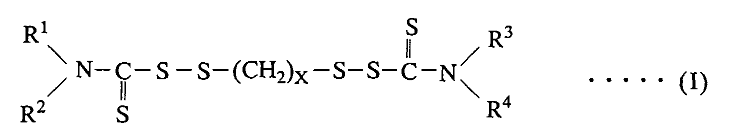
(wherein each of R¹-R⁴ is benzyl group or an alkyl group having a carbon number of 1-18 and X is 2-18);
Component (2): 0.1-2.0 parts by mass of at least one compound selected from the group consisting of benzothiazyl disulfides, benzothiazoles, amine salts and zinc salts of benzothiazoles and benzothiazolyl sulfenamides; and
Component (3): 0.1-2.0 parts by mass of at least one compound selected from the group consisting of amines, guanidines, aldehydeamines and aldehyde ammonia based on 100 parts by mass of a rubber component.

2. A tire according to claim 1, wherein each of R¹-R⁴ in the formula (I) is benzyl group or 2-ethylhexyl group and X is 6-12.

3. A tire according to claim 1, wherein the rubber member forming the interior of the tire is at least one rubber member selected from the group consisting of rubber between belt layers, cushion rubber between tread and belt and rubber between belt and carcass ply.

4. A tire according to claim 1, wherein the rubber component of the rubber composition contains natural rubber.

5. A tire according to claim 1, wherein the component (2) is at least one compound selected from the group consisting of 2-mercaptobenzothiazole, benzothiazolyl sulfenamide, zinc salt of 2-mercaptobenzothiazole and amine salt of 2-mercaptobenzothiazole.

6. A tire according to claim 1, wherein the rubber composition has a 90% vulcanization time at 120°C (t_{0.9}) of 12-18 minutes and a tensile stress at break after the vulcanization at 120°C for 20 minutes of not less than 29.0 MPa.

7. A vulcanized retreaded tire comprising a base tire, a tread for retreading and a cushion rubber disposed therebetween, **characterized in that** as the cushion rubber is used a rubber composition comprising;
Component (1): 0.1-4.0 parts by mass of a thiuram type compound represented by the following formula (**I**): 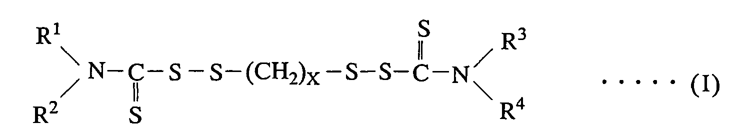
(wherein each of R¹-R⁴ is benzyl group or an alkyl group having a carbon number of 1-18 and X is 2-18);
Component (2): 0.1-2.0 parts by mass of at least one compound selected from the group consisting of benzothiazyl disulfides, benzothiazoles, amine salts and zinc salts of benzothiazoles and benzothiazolyl sulfenamides; and
Component (3): 0.1-2.0 parts by mass of at least one compound selected from the group consisting of amines, guanidines, aldehydeamines and aldehyde ammonia based on 100 parts by mass of a rubber component.

8. A retreaded tire according to claim 7, wherein a vulcanization temperature is 100-130°C.

9. A retreaded tire according to claim 7, wherein the rubber component of the rubber composition contains natural rubber.

10. A retreaded tire according to claim 7, wherein the component (2) is at least one compound selected from the group consisting of 2-mercaptobenzothiazole, benzothiazolyl sulfenamide, zinc salt of 2-mercaptobenzothiazole and amine salt of 2-mercaptobenzothiazole.

11. A retreaded tire according to claim 7, wherein the rubber composition has a 90% vulcanization time at 120°C (t_{0.9}) of 12-18 minutes and a tensile stress at break after the vulcanization at 120°C for 20 minutes of not less than 29.0 MPa.

12. A rubber composition for repairing a vulcanized rubber article comprising;
Component (1): 0.1-4.0 parts by mass of a thiuram type compound represented by the following formula (**I**): 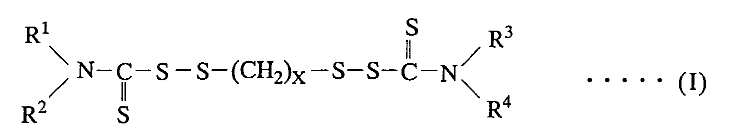 (wherein each of R¹-R⁴ is benzyl group or an alkyl group having a carbon number of 1-18 and X is 2-18);
Component (2): 0.1-2.0 parts by mass of at least one compound selected from the group consisting of benzothiazyl disulfides, benzothiazoles, amine salts and zinc salts of benzothiazoles and benzothiazolyl sulfenamides; and
Component (3): 0.1-2.0 parts by mass of at least one compound selected from the group consisting of amines, guanidines, aldehydeamines and aldehyde ammonia based on 100 parts by mass of a rubber component.
